Europäisches Patentamt

(19) European Patent Office

Office européen des brevets

(11) Numéro de publication: **0 055 699**

**A1**

(12) # DEMANDE DE BREVET EUROPEEN

(21) Numéro de dépôt: **81870050.2**

(51) Int. Cl.³: **F 16 G 11/12**

(22) Date de dépôt: **15.12.81**

(30) Priorité: **30.12.80 LU 83041**

(43) Date de publication de la demande:
**07.07.82 Bulletin 82/27**

(84) Etats contractants désignés:
**BE DE FR GB IT NL**

(71) Demandeur: **S.A. DEVILCA-FB la Société dite:**
**rue Joseph Sévrin 3**
**B-6850 Paliseul(BE)**

(72) Inventeur: **Berton, Alain**
**16, rue Au-Dessus de la Ville**
**B-6830 Bouillon(BE)**

(74) Mandataire: **Kellens, Georges E.**
**c/o BUGNION S.A. rue de Namur 43 -Bte 3**
**B-1000 Bruxelles(BE)**

(54) **Appareil tendeur de fils.**

(57) L'appareil est composé de deux pièces coopérantes (1, 2), l'une, une plaque (1) en forme générale rectangulaire, munie à chacun de ses petits côtés d'un retour ouvert vers le haut formant crochet (4, 5), portant en son centre une partie crénelée et, une deuxième pièce (2) s'étendant de part et d'autre, vers le haut par une partie (13) déterminant un canal rectiligne (15) et, vers le bas une dernière partie (17) en forme susceptible d'être l'objet d'une préhension, de manière qu'un fil (3) pris en dessous des deux crochets (4, 5) de la première pièce (1) et passant dans le canal rectiligne (15) de la deuxième pièce (2). Il suffit par en dessous de celle-ci de faire tourner la deuxième pièce (2) dans le sens de rotation possible, pour tendre le fil.

FIG 1

- 1 -

## Appareil tendeur de fils

La présente invention est relative à un appareil tendeur pour fils, câbles, de tout genre et de tout type mais plus particulièrement de fils métalliques ou en une matière de remplacement, nylon par exemple, fils nus ou enrobés, et utilisés comme un élément de séparation, clôture par exemple, et qu'il y a lieu de tendre après l'avoir accroché entre deux poteaux.

Différents dispositifs sont déjà proposés dans ce but, aucun ne présente les avantages et la simplicité du dispositif objet de la présente invention qui se caractérise par deux pièces coopérantes, l'une, la première pièce, une plaque de forme générale rectangulaire munie à chacun de ses petits côtés d'un retour vers le haut, partiellement ouvert formant crochet l'un vers la droite, l'autre vers la gauche, plaque portant en son centre une ouverture circulaire crénelée formant des dents, et l'autre, la deuxième pièce, tronçon d'une certaine longueur susceptible d'être placé et posé dans l'ouverture crénelée et comportant à cet effet une couronne présentant une face d'appui crénelée à dents, crénelage correspondant à celui de l'ouverture, dents de l'une ou de l'autre pièce ou des deux étant pentues sur au moins une partie de leur

- 2 -

face longitudinale horizontale, deuxième pièce s'étendant de part et d'autre de la couronne, vers le haut de préférence d'abord par une partie en forme circulaire terminée par une partie en forme générale de fer à cheval déterminant un canal rectiligne et vers le bas une partie d'abord en forme circulaire d'un diamètre juste inférieur à celui du petit diamètre hors tout de l'ouverture crénelée de la plaque, et ensuite aménagée sur une dernière partie en forme susceptible d'être l'objet d'une préhension manuelle ou par un outil simple comme, par exemple un tournevis droit, une clef à quatre pans, de manière qu'un fil étant pris en dessous des deux crochets de la première pièce, la plaque, et passant dans le canal rectiligne de la deuxième pièce celle-ci étant placée dans l'ouverture de la première, il suffit par en dessous de celle-ci de faire tourner dans le sens possible cette deuxième pièce pour obtenir l'augmentation de la tension du fil, la forme des dents respectivement de l'ouverture de la première pièce et de la couronne de la seconde n'autorisant une rotation que dans un sens.

Pour que le système soit parfaitement efficace, il faut que le fond du canal rectiligne de la première pièce soit plus haut que les crochets de la première pièce de sorte que le fil soit ainsi sous une certaine tension et pousse vers le bas la deuxième pièce dans la première.

Afin de mieux comprendre l'invention on la décrit maintenant de manière exemplative par rapport à un dessin qui représente schématiquement :

à la figure 1 : une vue par le côté du dispositif in situ,

- 3 -

à la figure 2 : une vue par le haut du dispositif in situ,

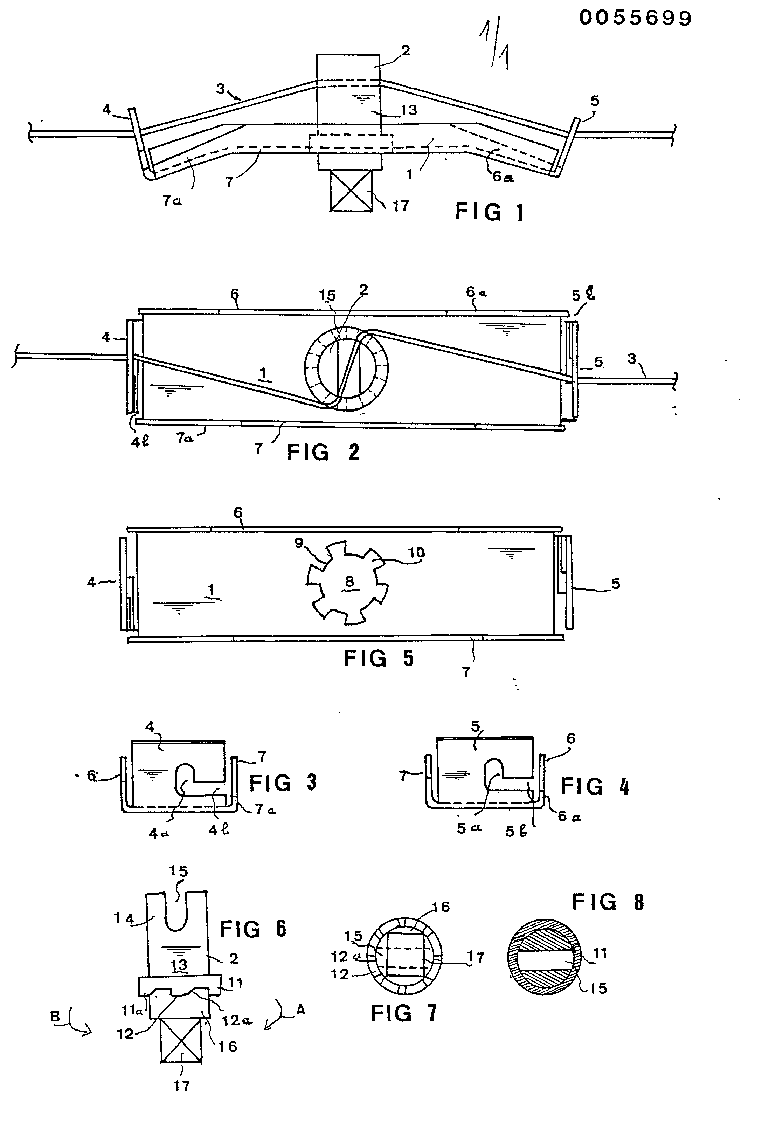

aux figures 3 et 4 : une vue en bout respectivement de chaque côté de la première pièce, la plaque, représentée à la
figure 1,

à la figure 5 : une vue par le haut de la seule première pièce, la plaque, représentée à la figure 1,

à la figure 6 : une vue agrandie par le côté de la seule
deuxième pièce, le tronçon,

à la figure 7 : une vue en bout par en dessous de la même
pièce qu'à la figure 6,

à la figure 8 : une vue en bout par le haut de la même pièce
qu'à la figure 6.

En se référant aux figures 1 et 2, on a représenté le dispositif composé par 1 la première pièce, c'est-à-dire la plaque
rectangulaire et par 2 la deuxième pièce, c'est-à-dire le tronçon, ainsi que le fil 3 tendu par le dispositif.

En se référant également aux figures 3 à 5 on va décrire les
caractéristiques de la pièce 1 qui se termine à chacun de ses
petits côtés par un retour vers le haut, respectivement 4 et
5 formant crochet réalisé par une encoche, respectivement 4a,
5a dont l'ouverture respectivement 4b, 5b est latérale de sens
opposé l'une par rapport à l'autre. Comme représentée, la
première pièce, la plaque 1 comporte encore des rebords
longitudinaux respectivement 6, 7 qui n'ont comme seule rai-

- 4 -

son que d'assurer la rigidité de la plaque 1. Toutefois, il ne s'agit donc pas d'une mesure obligatoire, de même les retours vers le haut 4 et 5 peuvent être conçus d'autre manière, et par exemple des pièces soudées à la plaque, ils peuvent être plus ou moins inclinés par rapport à la perpendiculaire à la plaque. De même on peut obtenir l'évasement des retours 4, 5 par exemple en prévoyant une plaque 1 s'évasant elle-même vers le bas près de chacune des extrémités de ses petits côtés. Afin de ne pas empêcher ou gêner l'introduction du fil 3 sous les crochets 4, 5 les rebords 6, 7 peuvent être comme représentés, partiellement réduits (découpés) en 6a et 7a. Au centre de la plaque 1 on voit l'ouverture crénelée 8 comportant des dents 9 et entre celles-ci les découpes 10.

En se référant aux figures 6 à 8 on voit les caractéristiques de la seconde pièce 2, le tronçon, qui est destiné à se placer sur la plaque 1 dans l'ouverture crénelée 8 et qui pose sur celle-ci par une couronne 11 dont la face d'appui 11a est crénelée, crénelage à dents 12 correspondant à celle-ci de l'ouverture crénelée 8. Comme visible, les dents 12 sont partiellement en pente, pentues sur une partie de leur longueur de sorte que dans un sens de rotation (flèche A) il y ait un blocage de la dent 12 contre la dent 9 de l'ouverture 8 de l'autre pièce 1 et par contre, dans l'autre sens (flèche B), une rotation possible. On a choisi une partie pentue aux dents 12 du tronçon 2, mais on obtient le même résultat, c'est-à-dire la rotation dans un sens, en prévoyant inversement une partie pentue aux dents 9 de l'ouverture crénelée 8 de la plaque 1, ou encore l'on peut prévoir une partie pentue à la fois aux dents 12 et à la fois aux dents 9 mais, bien entendu, les faces pentues des dents 9 et aux dents 12 doivent s'opposer pour permettre une rotation alors que s'opposent des faces droites permettant un blocage. Le tronçon 2 s'étend par ailleurs de part et d'autre de cette couronne, vers le haut par une partie 13, de préférence de forme circulaire, qui facilite l'enroulement possible du fil 3; cette partie 13 se termine par une portion en fer à cheval 14 déterminant un canal rectiligne 15 dans lequel va poser le fil 3; vers le bas le tronçon comporte d'abord une portion circulaire 16 dont le diamètre est juste inférieur au diamètre hors-tout de la partie crénelée de l'ouverture 8 de la plaque 1; cette portion 16 est destinée à maintenir le tronçon 2 dans la plaque 1 et ce de manière perpendiculaire, vers le bas le tronçon se termine par une partie 17 aménagée de manière à pouvoir faire tourner le tronçon 2; dans l'exemple représenté cette partie 17 est à quatre pans réguliers permettant de saisir le tronçon 2 au moyen d'une simple clef (non représentée) et le faire tourner. Il s'agit toutefois, d'une disposition exemplative, en effet, on peut prévoir bien d'autres manières d'aménager cette partie 17, par exemple d'y prévoir un trou ou un orifice latéral, permettant de prendre la pointe seulement ou d'y faire passer un outil simple : tige ronde, tournevis droit. Cependant, on peut éviter d'avoir recours à un outil quelconque et aménager directement la partie 17 de manière à lui donner une forme qui la rend susceptible d'une prise manuelle : papillon par exemple.

Pour que le système soit efficace, il faut, bien entendu, que le fond du canal rectiligne 15 se situe plus haut que les crochets 4, 5 de manière que le fil 3 pousse la deuxième pièce 2 vers le bas dans la première 1, cette poussée étant, par ailleurs, de plus en plus forte au fur et à mesure de l'augmentation de la tension sur le fil 3, due à la rotation de la deuxième pièce 2.

Le dispositif proposé, bien que particulièrement simple, est d'une utilisation très facile : le fil de la clôture étant en place, on peut fixer le dispositif en un endroit quelconque du fil entre les deux points où il est tenu (poteau par exemple), en passant d'abord le fil 3 dans le canal 15 du tronçon 2 et puis successivement sous les crochets 4 et 5, en tournant ensuite le tronçon dans le sens de la flèche B (fig. 6), on augmente la tension du fil 3 d'un quart de tour du tronçon (comme représenté à la fig. 2), on peut prévoir une rotation plus faible d'une, deux, etc. dents, ou au contraire bien plus, un demi tour, un deux, etc. tours de rotation; dans ces derniers cas le fil 3 va s'enrouler vers le bas sur le tronçon, en pratique sur la partie 16 du tronçon, partie qui pour cette raison est de préférence circulaire.

- 7 -

Revendications

1. Appareil tendeur pour fils, câbles, de tout genre et de tout type, mais plus particulièrement de fils métalliques, ou encore en une matière de remplacement, nylon par exemple, fils nus ou enrobés, et utilisés comme un élément de séparation, clôture par exemple, et qu'il y a lieu de tendre après l'avoir accroché entre deux poteaux; appareil tendeur, caractérisé en ce qu'il est composé de deux pièces coopérantes (1, 2), l'une, la première pièce, une plaque (1) de forme générale rectangulaire munie à chacun de ses petits côtés d'un retour vers le haut, partiellement ouvert, formant crochet (4, 5) l'un vers la droite, l'autre vers la gauche, plaque (I) portant en son centre une ouverture crénelée (8) formant des dents (9) et l'autre, la deuxième pièce, tronçon (2) d'une certaine longueur susceptible d'être placé et posé, dans l'ouverture crénelée (8) et comportant à cet effet, une couronne (11) présentant une face d'appui crénelée à dents (12), crénelage correspondant à celui de l'ouverture (8), dents (9 ou 12) de l'une ou de l'autre pièce ou des deux, étant pentues (12a) sur au moins une partie de leur face longitudinale horizontale, deuxième pièce (2) s'étendant de part et d'autre de la couronne (11), vers le haut de préférence, d'abord par une partie (13) en forme circulaire terminée par une partie (14) en forme générale de fer à cheval déterminant un canal rectiligne (15), et vers le bas une partie (16) d'abord circulaire d'un diamètre juste inférieur à celui du diamètre hors tout de l'ouverture (8) crénelée de la plaque (1), et ensuite aménagée sur une dernière partie (17) en forme susceptible d'être l'objet d'une préhension manuelle ou par un outil simple, comme par exemple un tournevis droit, clef à quatre pans, de

- 8 -

manière qu'un fil (3) étant pris en dessous des deux crochets (4, 5) de la première pièce (1), la plaque, et passant dans le canal (15) rectiligne de la deuxième pièce (2) , celle-ci étant placée dans l'ouverture (8) de la première; il suffit par en dessous de celle-ci de faire tourner dans le sens possible cette deuxième pièce pour obtenir l'augmentation de la tension du fil, la forme des dents respectivement de l'ouverture (8) de la première pièce (1) et de la couronne (11) de la seconde pièce (2) n'autorisant une rotation que dans un sens.

2. Appareil tendeur selon la revendication I, caractérisé en ce que le fond du canal rectiligne (15) de la deuxième pièce, dans lequel passe le fil (3), venant et allant sous les crochets (4, 5) de la première pièce (1), est situé plus haut que ces- dits crochets (4, 5) de manière que la deuxième pièce (2) est poussée vers le bas dans la première pièce (1).

3. Appareil tendeur selon la revendication 2, caractérisé en ce que la première pièce, la plaque (1), s'évase vers le bas, près de ses extrémités de ses petits côtés, amenant les crochets (4, 5) à se situer plus bas que le fond du canal rectiligne (15) de la deuxième pièce (2).

4. Appareil tendeur selon l'une quelconque des revendications 1 à 3, caractérisé en ce que les retours de la première pièce, la plaque (1), comportant les crochets (4, 5), sont en évasement par rapport à la plaque.

5. Appareil tendeur selon l'une quelconque des revendications 1 à 4, caractérisé en ce que la dernière partie (17) de la seconde pièce (2) est à quatre pans réguliers permettant de la saisir au moyen d'une simple clef.

6. Appareil tendeur selon l'une quelconque des revendications 1 à 5, caractérisé en ce que la dernière partie (17) de la seconde pièce (2) comporte un trou ou orifice permettant de prendre la pointe ou d'y faire passer un outil simple.

0055699

1/1

FIG 1

FIG 2

FIG 5

FIG 3

FIG 4

FIG 6

FIG 7

FIG 8

0055699

Numéro de la demande

EP 81 87 0050

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée |
|---|---|---|
| X | <u>FR - A - 1 233 597</u> (GRATIEN)<br><br>* en entier * | 1-3,5 |
| | -- | |
| A | <u>FR - A - 551 379</u> (LEFORT)<br><br>* figure 1 * | 1 |
| | -- | |
| A | <u>FR - A - 811 593</u> (DELAVAL)<br><br>* en entier * | 1,4,6 |
| | -- | |
| A | <u>FR - A - 974 891</u> (TREY)<br><br>* page 2, lignes 3-14; figures 7,8 * | 4 |
| | -- | |
| A | <u>GB - A - 771 264</u> (CHANSON)<br><br>* page 2, lignes 9-13 * | 6 |

CLASSEMENT DE LA
DEMANDE (Int. Cl. 3)

F 16 G 11/12

DOMAINES TECHNIQUES
RECHERCHES (Int. Cl. 3)

F 16 G

CATEGORIE DES
DOCUMENTS CITES

X: particulièrement pertinent
  à lui seul
Y: particulièrement pertinent
  en combinaison avec un
  autre document de la
  même catégorie
A: arrière-plan technologique
O: divulgation non-écrite
P: document intercalaire
T: théorie ou principe à la
  base de l'invention
E: document de brevet
  antérieur, mais publié à la
  date de dépôt ou après
  cette date
D: cité dans la demande
L: cité pour d'autres raisons

&: membre de la même famille,
  document correspondant

Le présent rapport de recherche a été établi pour toutes les revendications

| Lieu de la recherche | Date d'achèvement de la recherche | Examinateur |
|---|---|---|
| La Haye | 15-03-1982 | NADELHOFFER |

OEB Form 1503.1   06.78